# EUROPEAN PATENT APPLICATION

(11) **EP 3 926 567 A1**
(43) Date of publication of application: **22.12.2021**
(21) Application number: 20181153.6
(22) Date of filing: 19.06.2020
(51) Int. Cl.: G06Q 30/00, G06Q 30/02

(54) **SYSTEM AND METHOD FOR AUTHENTICATION AND REGISTRATION OF PRODUCTS AND DYNAMICALLY RENDERING CONTENT**

(71) Applicant: Epic After Holdings LLC, Pearl River, NY 10965 (US)
(72) Inventor: MCMULLEN, Michael, COTO DE CAZA, CA California 92679 (US); GUNNISON, Scott, CHICAGO, IL Illinois 60646 (US); BALDWIN, Nathan, DARIEN, CT Connecticut 06820 (US)
(74) Representative: Curell Suñol S.L.P.

(57) **Abstract**

A system and method for authentication of a product and registration of an authenticated product at a server. After registration of the user, response events are asynchronously used to collect data, search for stored product information and registration records, score attributes of the user and dynamically render content to be sent to the user, manufacturer, retailer or third party provider.

## Description

### Field of the invention

The present invention relates to a system and method for expedited registration of products at a server and dynamically generating content for both users and manufacturers, retailers or third party providers based on the registration. The system and method can include authentication of the product before registration of the authenticated product.

### State of the art

Manufacturers of user products typically provide warranties for a user product. In order for a user to receive the warranty, the user may be required to register the purchase of the user product with the manufacturer. Conventional product registration procedures have included the user filling out an information card with their address and the product model number of the user product, mailing the information card to a manufacturer and the manufacturer entering the data from the information card into a database at the manufacturer. Users often do not complete the above cumbersome procedure and have difficulty during the life of the product to obtain warranty information or updates of the product.

U.S. Patent Publication No. 2016/009288 describes systems and methods for facilitating product management using an associated code directed to product information and a product life-cycle. The code can be associated with a product and affixed to the product, for example, by printing the code on the product or a packing of the product. Users of the product can initiate an action included in the product life-cycle by using an electronic device to take a picture of the code and texting the picture to a system. The system will process the code and determine a static next action in the product life-cycle.

It is desirable to provide an improved method and system for expedited registration of user products at a server and dynamically rendering content for the user directed to the user product as well as rendering content for manufacturers, retailers, third party providers and/or social media platforms directed to attributes of the registered user. It is also desirable to provide a method and system for authenticating a user product at the server, registering the authenticated user product at the server and dynamically rendering content to the user directed to the authenticated user products and dynamically rendering content to manufacturers, retailers, third party providers and/or social media platforms directed to attributes of the registered user.

### Summary of the invention

The present invention relates to a system and method for expedited registration of products at a server and dynamically generating content for both users and manufacturers, retailers or third party providers based on the registration. In one embodiment, a text of a product model number is sent to a short code to initiate the registration process. In an alternate embodiment, data is embedded in a label associated with a product. The data can be read from the label to initiate the registration process. User information is collected for creating a registration record. After registration of the user, response events are asynchronously used to collect data, search for stored product information and registration records, score attributes of the user and dynamically render content to be sent to the user, manufacturer, retailer or third party provider.

The system and method for expedited registration of products at a server method of the present invention can use existing information directed to a product to facilitate the registration process and find enhanced information about the product without requiring a unique pin or code. In one embodiment, any piece of information about a product can be used to dynamically determine a code for the product for registration without the need of the user to enter a PIN or code. Scored attributes of the user can be used to rank the user propensity to respond to various types of follow up marketing. For example, scored attributes including previous registrations, previous transactions, product profiling, and demographics can be used to make decisions on how and when to send dynamic messaging based on the scoring. Those scored attributes can be passed back to a manufacturer of the product or used by a third party for marketing channels to sell products and services. In one embodiment, the marketing channels can include social media. In one embodiment, the system and method for expedited registration of products at a server method of the present invention provides privacy compliance to allow a user the option to change or edit their permissions at the product level.

In one aspect, the system and method of the present invention can determine authenticity of a user product being registered at the server and dynamically generate content if the registration is authenticated. In one embodiment, unique identifiers are incorporated into the user product. For example, the identifier can be incorporated into the user product using a RFID chip. The RFID chip is scanned by an RFID reader to initiate the authentication process. The scanned identification read from the RFID chip is matched against records for authenticated user products. If the identification matches a record for an authenticated user product, user information can be collected for creating a registration record of the authenticated user product to include user registration information. After registration of the user, response events are asynchronously used to collect data, search for stored product information and registration records, score attributes of the user and dynamically render content to be sent to the user, manufacturer, retailer or third party provider.

In a first embodiment of the method for authenticating a product, the method comprises the steps of:
receiving, over a network by an authentication module embodied in a non-transitory computer memory of an authentication data collection content rendering system operating on one or more processors, an electronic authentication request message from an input device, the authentication request message including an identification input of a user product;
searching data storage for data of a user product identified by the identification input of the user product by an authentication service module embodied in a non-transitory computer memory of an authentication data collection content rendering system; and
sending to the input device an authentication confirmation when the authentication service module has identified that the identification input of the user product has identified an authentication record stored in the data storage.

The invention further includes a number of preferred features that are object of the dependent claims and the utility of which will be highlighted hereinafter in the detailed description of an embodiment of the invention.

In another embodiment the electronic authentication request message is preferably generated from the input device communicatively connected to the authentication data collection content rendering system via the network, the input device having a reader, the reader comprises at least one of a NFC reader and an RFID reader, wherein the reader inputs the identification input of a user product by reading a RFID tag or NFC tag.

In another embodiment the method preferably further comprises the steps of:
receiving, over the network by a data collection module embodied in a non-transitory computer memory of the authentication data collection content rendering system operating on one or more processors, an electronic registration request message from the input device, the registration request message including an identifier of a user product;
searching data storage for data of a user product identified by the identifier of the user product by a search service module embodied in a non-transitory computer memory of the authentication data collection content rendering system;
searching data storage for data of a user product identified by the identifier of the user product by a search service module embodied in a non-transitory computer memory of the authentication data collection content rendering system;
asynchronously collecting user information from the user by the data collection module when the search service module has identified that the identifier of the user product has identified user product stored in the data storage, the data collection module creating a registration record with the identifier of a user product and the user information;
storing the registration record in a data storage; and
asynchronously generating one or more response events by a content service module embodied in the non-transitory computer memory of the authentication data collection content rendering system to dynamically render content associated with the registration record.

In another embodiment, the electronic registration request message preferably includes input generated from a collection endpoints module embodied in a non-transitory computer memory of a collection endpoints system operating on one or more processors, the collection endpoints module using data received from the input device communicatively connected to the collection endpoints system via the network, the data being generated from one or more of an electronic text code, a hyperlink accessed by a messaging application running on the input device, image processing, voice processing and natural language processing.

In another embodiment, the method preferably further comprises the steps of:
the data collection module generating a registration event when the registration record is created and posting the registration event in a queue;
asynchronously receiving from the queue the registration event at a scoring service module embodied in the non-transitory computer memory of the data collection content rendering system, the scoring service module obtaining the stored registration record and determining a score for attributes from the registration record; and
   posting the score as the response event into the queue.

In another embodiment the attributes from the registration record preferably include a probability of the user to respond and a monetary value of a specific accessory or service for purchase.

In another embodiment, the method preferably further comprises the steps of:
asynchronously receiving the score as the response event from the queue;
activating a decision service module to determine a decision from the score and the data from the registration record; and
posting the decision as the response event in the queue.

In another embodiment, the decision is preferably based on if the score is above a predetermined threshold generating an offer and further comprising the step of:
posting the offer on one or more of a social media platform, platform of a user, platform of a manufacturer of a user product and a third-party E-commerce platform.

In another embodiment, the method preferably further comprises the steps of:
asynchronously receiving the decision as the response event from the queue;
activating a message service module embodied in the non-transitory computer memory of the authentication data collection content rendering system, the message service module obtaining content from the data storage based on the decision; and
the message service module posting the obtained content on the queue to render the content associated with the registration record.

In another embodiment, the method preferably further comprises the steps of:
asynchronously receiving the decision as the response event; the decision service module delegating the response event to a privacy service to get customer data, get regulatory policies and/or local policies to set a privacy action based on the customer data and the regulatory and/or local policies;
generating a decision including the privacy action as a response event; and
posting the decision including the privacy action as a response event in the queue.
In another embodiment, the input preferably includes a data message from a social media platform and the collected user information includes one or more of data demographic and propensity data from the social media platform.

The invention further relates to a system for authenticating a product comprising:
a processing system including at least one processor, and non-transitory computer memory including instructions translatable by the at least one processor to perform:
receiving, over a network by an authentication module embodied in a non-transitory computer memory of an authentication data collection content rendering system operating on one or more processors, an electronic authentication request message from an input device, the authentication request message including an identification input of a user product;
searching data storage for data of a user product identified by the identification input of the user product by an authentication service module embodied in a non-transitory computer memory of the authentication data collection content rendering system; and
sending to the input device an authentication confirmation when the authentication service module has identified that the identification input of the user product has identified an authentication record stored in the data storage.

In another embodiment of the system, the electronic authentication request message is preferably generated from an input device communicatively connected to the data collection content rendering system via the network, the input device having a reader, the reader comprises at least one of a NFC reader and an RFID reader, wherein the reader inputs the identification input of a user product by reading a RFID tag or NFC tag and
receiving, over the network by a data collection module embodied in a non-transitory computer memory of the authentication data collection content rendering system operating on one or more processors, an electronic registration request message from the input device, the registration request message including an identifier of a user product;
searching data storage for data of a user product identified by the identifier of the user product by a search service module embodied in a non-transitory computer memory of the authentication data collection content rendering system;
asynchronously collecting user information from the user by the data collection module when the search service module has identified that the identifier of the user product has identified user product stored in the data storage, the data collection module creating a registration record with the identifier of a user product and the user information;
storing the registration record in a data storage;
asynchronously generating one or more response events by a content service module embodied in the non-transitory computer memory of the authentication data collection content rendering system to dynamically render content associated with the registration record, and a queue wherein the data collection module performs generating a registration event when the registration record is created and posting the registration event in the queue;
   asynchronously receiving from the queue the registration event at a scoring service module embodied in the non-transitory computer memory of the authentication data collection content rendering system, the scoring service module obtaining the stored registration record and determining a score for attributes from the registration record; and
   posting the score as the response event into the queue.

Finally, the invention also relates to a method for registering a product, the method comprising the steps of:
receiving, over a network by a data collection module embodied in a non-transitory computer memory of a data collection content rendering system operating on one or more processors, an electronic registration request message from an input device, the registration request message including an identifier of a user product;
searching data storage for data of a user product identified by the identifier of the user product by a search service module embodied in a non-transitory computer memory of a data collection content rendering system;
asynchronously collecting user information from the user by the data collection module when the search service module has identified that the identifier of the user product has identified user product stored in the data storage, the data collection module creating a registration record with the identifier of a user product and the user information;
storing the registration record in a data storage; and
asynchronously generating one or more response events by a content service module embodied in the non-transitory computer memory of the data collection content rendering system to dynamically render content associated with the registration record wherein the electronic registration request message is generated from an input device communicatively connected to the data collection content rendering system via the network, the input device having a reader, wherein the reader inputs the identifier of a user product by reading an input label and wherein the reader comprises at least one of a NFC reader, an RFID reader, and an identification image reader and the tag comprises at least one of an NFC tag, RFID tag and an identification image.

In another embodiment of the method for registering a product, the method further comprises the steps of:
the data collection module generating a registration event when the registration record is created and posting the registration event in a queue;
asynchronously receiving from the queue the registration event at a scoring service module embodied in the non-transitory computer memory of the data collection content rendering system, the scoring service module obtaining the stored registration record and determining a score for attributes from the registration record; and
posting the score as the response event into the queue, wherein the attributes from the registration record include a probability of the user to respond and a monetary value of a specific accessory or service for purchase and/or if the score is above a predetermined threshold the user is entered into a marketing campaign.

The invention will be more fully described by reference to the following drawings.

### Brief description of the drawings

Fig. 1 is a schematic diagram of a system for registration of products and dynamically rendering of content in accordance with the teachings of the present invention.
Fig. 2 is a schematic diagram of an implementation of the system for registration of products and dynamically rendering of content.
Fig. 3 is a flow diagram of a method for registration of a product in accordance with the teachings of the present invention.
Fig. 4 is a flow diagram of method for rendering content and providing other services in accordance with the teachings of the present invention.
Fig. 5 is a flow diagram of a method for implementing privacy features in the system for registration of products and dynamically rendering of content.
Fig. 6 is a schematic diagram of static clings and stickers which can be used with the messaging application of the present invention.
Fig. 7 is a schematic diagram of a registration scenario for use in the registration process in the present invention.
Fig. 8 is a schematic diagram of a registration scenario for use in the registration process in the present invention.
Fig. 9 is a schematic diagram of implementation of registration and rendered content of the present invention
Figs. 10A-10C are schematic diagrams of example predictive analytics for use in the scoring process in the present invention.
Fig. 11 is schematic diagram of a system for registration of products and dynamically rendering of content in accordance with the teachings of the present invention.
Fig. 12 is a schematic diagram of a label which can be used with the registration application of the present invention.
Fig. 13 is a schematic diagram of a registration scenario for use in the registration process in the present invention.
Fig. 14 is a schematic diagram of an implementation of the system for registration of products and dynamically rendering of content.
Fig. 15 is a flow diagram of a method for registration of a product in accordance with the teachings of the present invention.
Fig. 16 is a schematic diagram of a system for authentication and registration of products and dynamically rendering of content in accordance with the teachings of the present invention.
Fig. 17 is a flow diagram of a method for authentication of a product in accordance with the teachings of the present invention.
Fig. 18 is a flow diagram of a method for authentication and registration of a product in accordance with the teachings of the present invention.

### Detailed description of embodiments of the invention

Reference will now be made in greater detail to a preferred embodiment of the invention, an example of which is illustrated in the accompanying drawings. Wherever possible, the same reference numerals will be used throughout the drawings and the description to refer to the same or like parts.

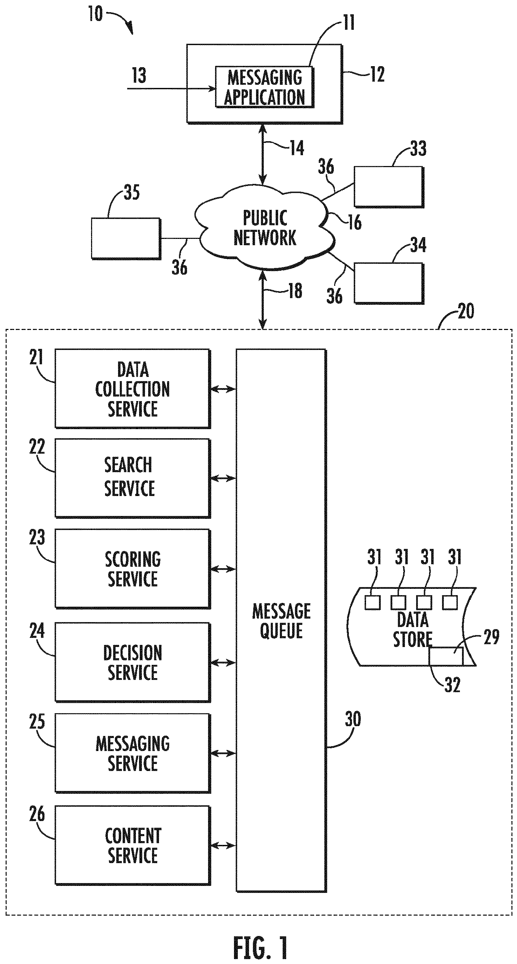

Fig. 1 is a schematic diagram of a system for registration of products and dynamically rendering of content 10 in accordance with the teachings of the present invention. Messaging application 11 is executed on input device 12. Messaging application 11 can receive input 13. For example, input 13 can be from a user directed to a product the user would like to have registered and personal information directed to the user. Input device 12 can be a device for generating and receiving electronic data such as a cellular phone, tablet or laptop. Input 13 can be an electronic message of various message types/formats including, but not limited to, SMS, MMS, RCS and/or e-mail messages. Electronic messages can include text and/or image data. In one embodiment, input 13 can be a data message to a social media platform.

In one embodiment, input 13 is an electronic message of an identifier such as for example a model number of a user product and an electronic text code which is used to generate a registration request. Input device 12 connects over connection 14 to public network 16. Public network 16 connects over connection 18 to data collection content rendering unit 20. In one embodiment, public network 16 is the Internet and connections 14 and 18 can be WiFi connections. Input device 12 can receive content from data collection and content rendering unit 20 over connections 14 and 18 using public network 16.

Data collection content rendering system 20 includes data collection service module 21, search service module 22, scoring service module 23, decision service module 24, message service module 25 and content service module 26 to dynamically render content for both users and manufacturers, retailers or third party providers based on the registration of a product as described below. Data collection service module 21, search service module 22, scoring service module 23, decision service module 24, message service module 25 and content service module 26 can be embodied on non-transitory computer memory of a data collection content rendering system 20 system operating on a processing system including one or more processors. Data collection service module 21, search service module 22, scoring service module 23, decision service module 24, message service module 25 and content service module 26 send and receive data using message queue 30. Data is stored in data storage unit 32. Data can include registration records 31 and data 29 directed to a product or service which can be provided or associated with the product. For example, data storage unit 32 can be a database. Manufacturers 33, retailers 34 and third party service providers 35 can receive dynamically rendered content over connection 36 from data collection content rendering unit 20 over public network 16.

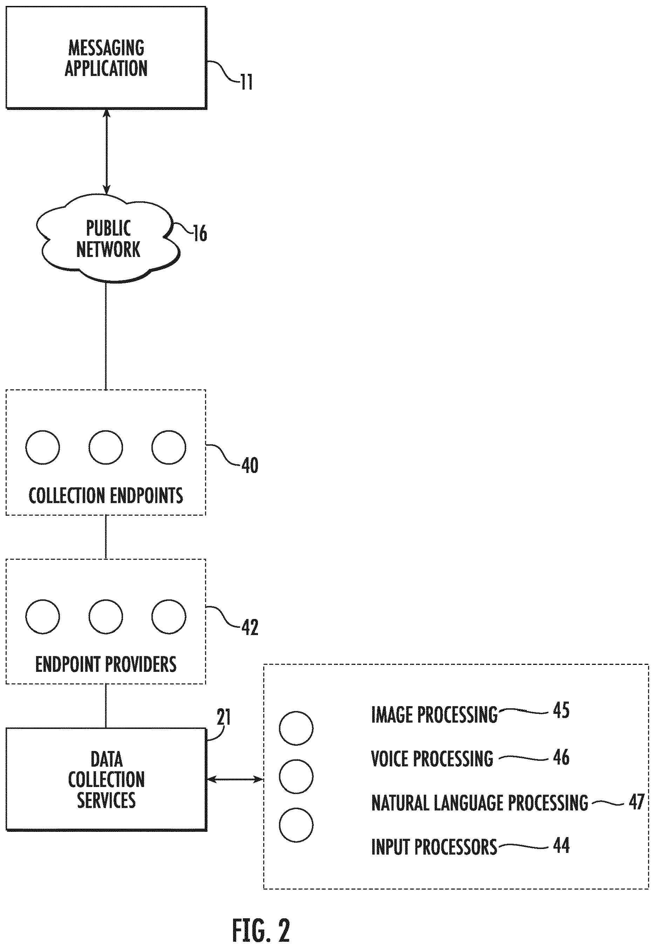

Fig. 2 is a schematic diagram of an implementation of an enhancement to data collection service module 21. Collection endpoints module 40 receives data from messaging application 11 through public network 16. For example, collection endpoints module 40 can receive a text message or data from a hyperlink accessed by messaging application 11. Endpoint providers 42 receive data from endpoints module 40 and forwards the data to data collection service module 21 to generate a registration request. In an alternative embodiment, input processors 44 can forward information to data collection service module 21. Input processors 44 can include image processing 45, voice processing 46 and natural language processing 47. Image processing 45 can receive an uploaded image such as a serial number of a product. Image processing 45 can run Al image recognition to extract data of a serial number from the uploaded image. The extracted serial number can be forwarded to data collection service module 21. Voice processing 46 can receive spoken information directed to a product such as a serial number of a product to determine data of the serial number. The serial number can be forwarded to data collection service module 21. Natural language processing 47 can receive spoken information directed to a product such as a serial number of a product to determine data of the serial number. The serial number can be forwarded to data collection service module 21.

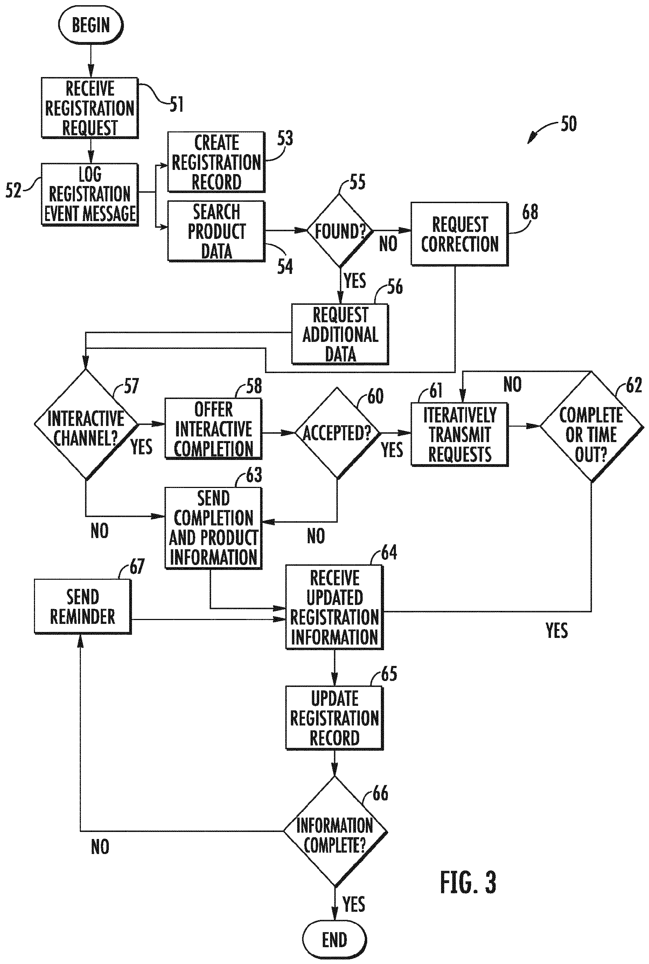

Fig. 3 is a flow diagram of a method for registration of a product 50 for implementation of search service module 22. In block 51, a registration request is received. The registration request is generated by input 13 being received at messaging application 11 as shown in Fig. 1 or using collection endpoints module 40 and endpoint providers as shown in Fig. 2 and described above. In block 52, the received registration request is logged as a registration event message. In block 53, a registration record is created. Product data from the registration event message is searched in data storage unit in block 54 and the results are determined using data decision block 55. If the product is determined to be registered in decision block 55, a request for additional data is performed in block 56. The additional data can include for example a name of a purchaser of the product to be registered, street address of the purchaser, email address of the purchaser and date the product was purchased. In one embodiment, the additional data demographic or propensity data from a social media platform which was used to register the product. Interactive channel decision block 57 determines if the additional data is directed to an interactive channel. If the additional data is determined to be directed to an interactive channel, offer interactive completion block 58 is activated to send an offer to a user based on the additional data. In acceptance decision block 60, if it is determined that the interactive offer was accepted, block 61 is performed to interactively transmit requests to the user for completion of the requested additional data. Review of the requested data is performed at completion decision block 62. If completion decision block 62 determines the registration is complete, updated registration information is received at block 64. If it is determined in completion decision block 62, that the offer is not completed or if there is a time out, block 61 is performed to interactively submit the request to completion decision block 62.

If interactive channel decision block 57 determines the additional data is not directed to an interactive channel, send completion and product information block 63 sends completion and product information to block 64. In block 65, the registration record is updated with the updated registration information. Information complete decision block 66 determines if the registration information is complete. If the registration information is complete, an updated registration record is stored in data storage unit 32 and a registration event is sent to message queue 30, shown in Fig. 1. Referring to Fig. 3, if information complete decision block 66 determines the registration record is incomplete, a reminder is sent in block 67 for updated registration information which is forwarded to block 64.

If the product is determined not to be registered in decision block 55, block 68 is performed to request a correction which is forwarded to interactive channel decision module 57 and proceeds thereafter as described above.

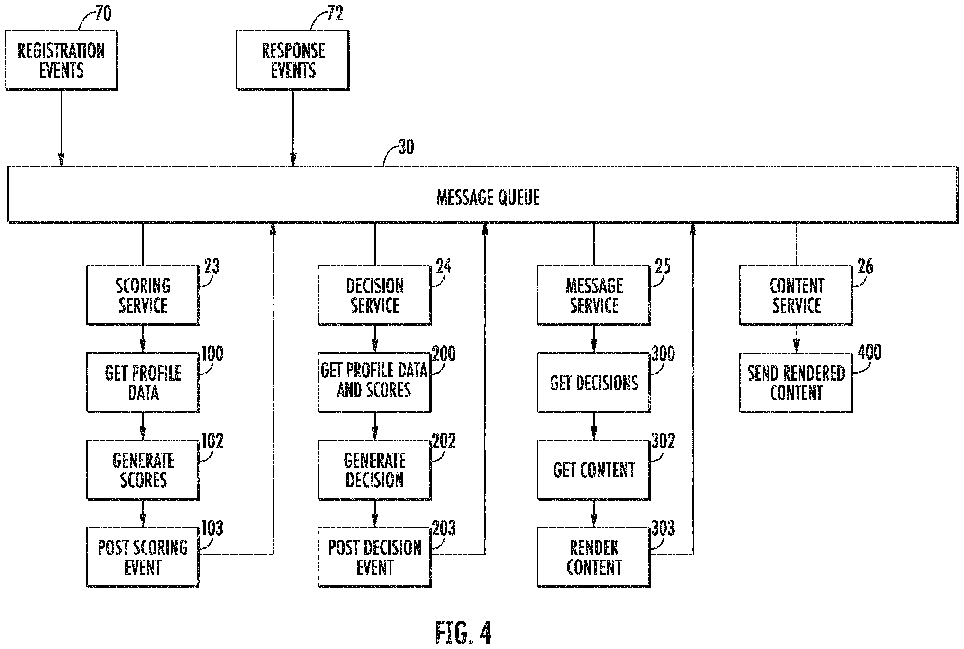

Fig. 4 is a flow diagram of a method for rendering content performed in data collection and content rendering unit 20 for implementation of scoring service module 23, decision service module 24, message service module 25 and content service module 26. Content rendering unit 20 can be implemented in a processing system, such as a server, including at least one processor. Registration events 70 from method for registration of a product 50 are received in message queue 30. Response events 72 generated from scoring service module 23, decision service module 24, message service module 25 and content service module 26 are received in message queue 30. Registration events 70 and response events 72 can be processed asynchronously from message queue 28 for dynamically activating one or more of scoring service module 23, decision service module 24, message service module 25 and content service module 26.

Scoring service module 23 can be activated upon receipt of registration event 70. In block 100, profile data block 100 obtains registration records from data storage unit 32 as shown in Fig. 1. Referring to Fig. 4, score generation block 102 determines a score for data from the registration record. For example, the score can be related to desired content for the user, the manufacturer, the retailer, or a third party provider. Example third party providers can include product repair service providers, warranty service providers marketing service providers and social media platforms. Score generation block 102 can include a set of predictive models with attributes of the registration record to score or rank a customer based on a probability to respond and a monetary value of a specific accessory or service the customer might purchase. In block 103, a scoring event is posted as response event 72 in message queue 30. The scoring event can include the score generated in score generation block 102.

Decision service module 24 can be activated upon receipt of response event 72 directed to a score generated by score generation block 102. Profile data and score block 200 obtains a registration record from data storage and the score from the scoring event posted as response event 72. In decision block 202, a decision is determined based on data from the registration record and the score. Example decisions include that if a customer score is above a predetermined threshold the customer has a high probability of response and a decision event can enter the customer into a marketing campaign. The form, timing and content of the marketing campaigns are also examples of decisions; for example, inclusion of discount, as well as the monetary value of any discounts can be formulated as decisions. In block 203, a decision event is posted as response event 72 in message queue 30. The decision event can include the decision determined in decision block 202.

Message service module 25 can be activated upon receipt of response event 72 directed to a decision made by decision block 202. Get decision block 300 obtains a decision from response event 72. Get content block 302 obtains related content based on the decision. For example, if the decision indicated the customer should be entered in a marketing campaign, get content block 302 can obtain content directed to the product from data storage such as a particular offer which can be part of a direct mail campaign. In an alternate embodiment, a particular offer can be part of a post on a social media platform. Example social media platforms include Facebook and Instagram. In an alternate embodiment, a particular offer can be provided to marketing channels, such as a platform of a user, platform of a manufacturer of a user product or a third-party E-commerce platform. Example, E-commerce platforms can include one or more of online merchants, online stores and retail point-of-sale systems. In 303, rendered content is posted in message queue 30. Content service module 26 can be activated upon receipt of rendered content from message queue 30. In send block 400, rendered content is sent from data collection and content rendering unit 20 to one or more of input device 12, manufacturer 33, retailer 34, third party service providers 35 as shown in Fig. 1.

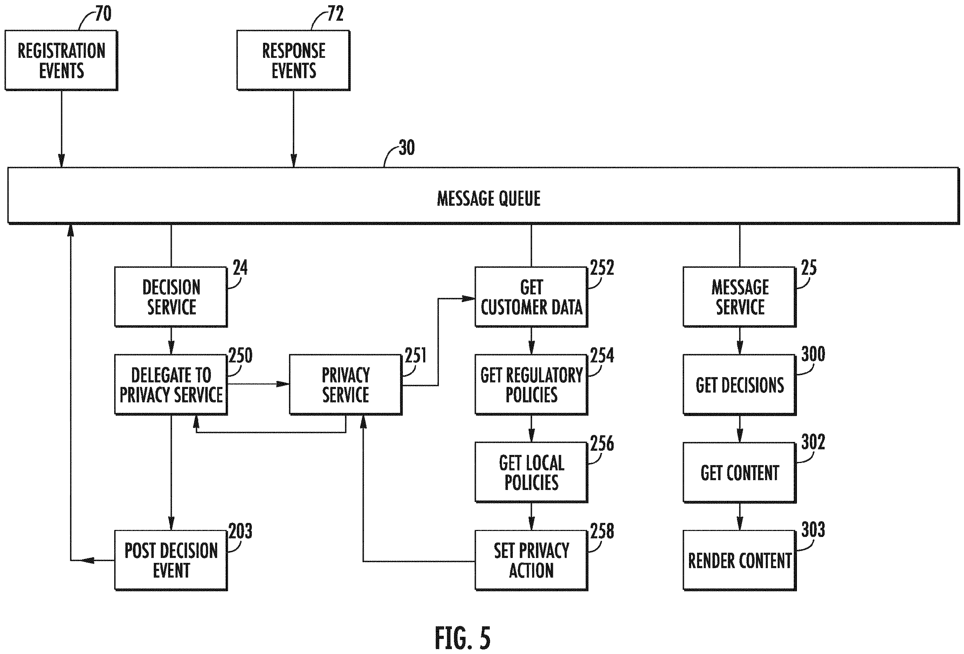

Fig. 5 is a flow diagram of a method for implementing privacy features 500 in the system for registration of products and dynamically rendering of content 20. Decision service module 24 can be activated upon receipt of response event 72 to delegate the response event to a privacy service in block 250. Privacy service is activated in privacy service block 251 to get customer data in block 252, get regulatory policies in block in block 254, get local policies in block 256, and to set a privacy action in block 258. The privacy action is received in privacy service 251 block and is transferred by delegate to privacy block 250. In block 203, a decision event is posted as response event 72 in message queue 30. The decision event can include privacy action determined in set privacy action block 258.

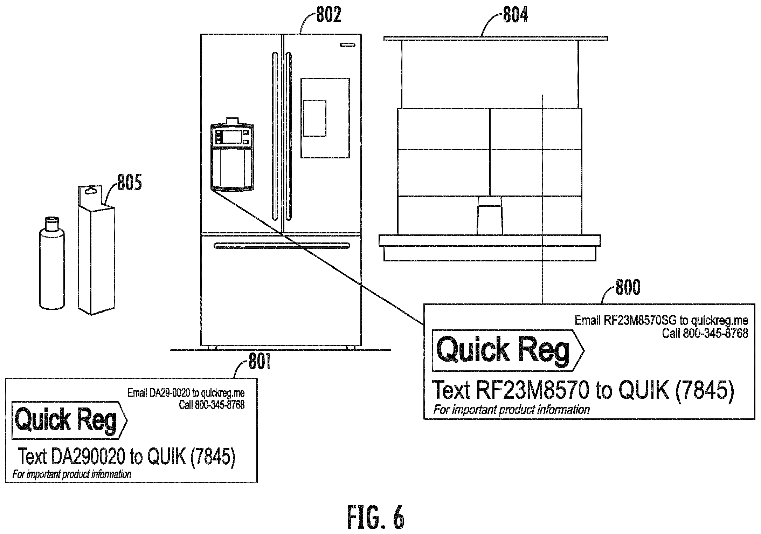

Fig. 6 is a schematic diagram of static clings 800 and stickers 801 which can be attached for example directly to product 802, product accessory 804 and product packaging 805. In an example embodiment, static clings 800 and stickers 801 can include indicia to text a model number to a short code, such as text "1234567" to "QUIK" to register your product using messaging application 11 shown in Fig. 1. In alternative embodiments, a customer can use the telephone for voice registration with data collection content rendering unit 20. Alternatively, a customer can email the model number to a website associated with data collection content rendering unit 20 or a spoken request can be translated into an action, for example using Siri, Alexa, Cortana, or Google Assistant or an alternate translation interface, for contacting registration data collection content rendering unit 20.

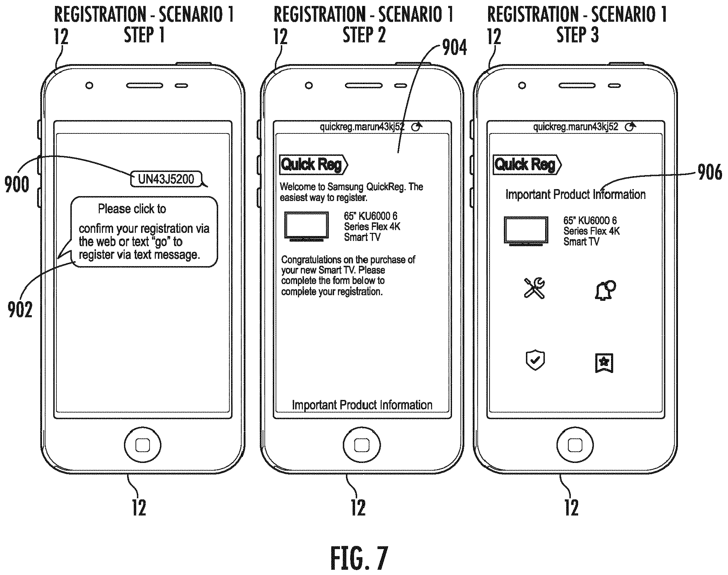

Fig. 7 is a schematic diagram of a registration scenario for use in the registration process in the present invention. Text message 900 including a product module number is sent to a short code or telephone number as described above. Text 902 is sent to input device 12. Text 902 can include a link or an indication to confirm registration by texting a message for example "go". If the link is accessed at input device 12, mobile enabled registration page 904 can be displayed at input device 12. Registration page 904 can include for example an image of the product and to complete registration such as to click and populate a name, address and phone number field and click to opt into future communication and register the product for future service and product information. Alternatively, the inbound mobile phone number of input device 12 can be used by data collection and content rendering unit 20, collection endpoints 40 or endpoint providers 42 to append data attributes that are publicly known, such as for example last known physical address, email address, household income, and the like. Decision service module 24 can determine the information that is required for a decision, delegate retrieval of the information to other systems, such as for example a unit that retrieves demographic information from a third-party provider, integrate the retrieved information, and make a decision based on the integrated data.

If the product was registered for future communication, mobile enabled product information page 906 can be displayed at input device 12. Product information page 906 can include for example a description of the product, product information, such as digital manuals, rebates and the like. Product information page 906 can include offers made at time of registration for parts, services, service contracts and third party service offerings available for the model number that was registered.

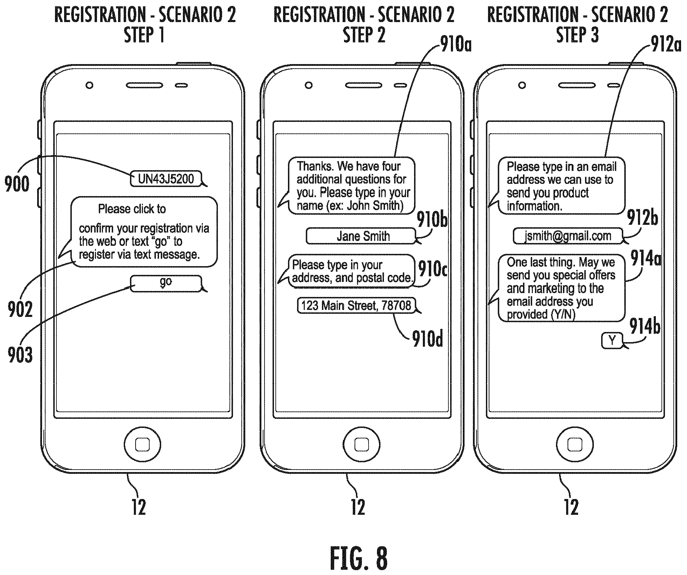

Fig. 8 is a schematic diagram of a registration scenario for use in the registration process in the present invention. Confirmation text message 903 is sent to a short code or telephone number as described above. Registration information texts 910a-910n can be sent and received at input device 12. Referring to Fig. 8, registration information texts 910a-910n can include a name, address and phone number. Email registration information texts 912a-912b can be sent and received at input device 12 to enter email registration information. Privacy information texts 914a-914b can be sent and received at input device 12 to enter privacy registration information in order to opt into future communication. Registration information texts 910a-910n, email registration information texts 912a-912b and privacy information texts 914a-914b can be used to enter registration information into messaging application 11 as shown in Fig. 1.

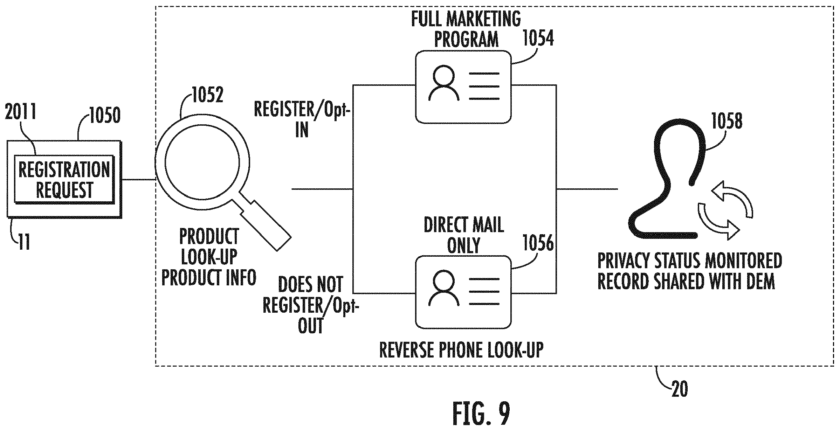

Fig. 9 is a schematic diagram of implementation of registration and rendered content of the present invention. Registration request 1050 is received at messaging application 11 or registration application 2011. Product look-up and product information 1052 is generated by data collection and content rendering unit 20 as described above. If a user registers and opts in such as by using privacy information text 914b, full marketing program content 1054 can be rendered with data collection content rendering unit 20. If a user does not register or opts out such as by using privacy information text 914b, direct mail content 1056 can be rendered with data collection content rendering unit 20. Privacy status can be monitored and depending on the privacy status a registration record can be shared with an OEM as described above.

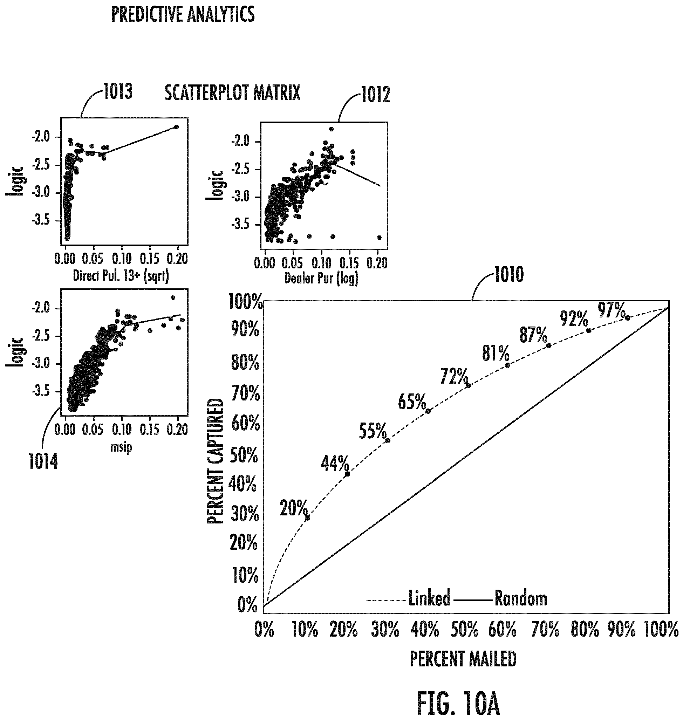

Figs. 10A-10C are schematic diagrams of example predictive analytics for use in the scoring process in the present invention. Figs. 10A-10C are schematic diagrams of example predictive analytics for use in the scoring process in the present invention. Statistical models are used in support; models can, among other things, classify customers into segments, predict their likelihood to behave in certain ways, and estimate their relative long-term value. System for registration of products and dynamically rendering of content 10 has a common framework for registering such analytical algorithms, invoking them so that customer records can be scored, and incorporating scores into the decisions made about registration events and customers. Example scatterpoint matrices 1012-1014 are shown in Fig. 10A and an example stochastic model is shown as 1010. Model algorithms can take a number of forms such as for example logit models, stochastic models depending on the form and origin of the model, System for registration of products and dynamically rendering of content 10 can either implement the algorithm directly or invoke an external software application to execute the model.

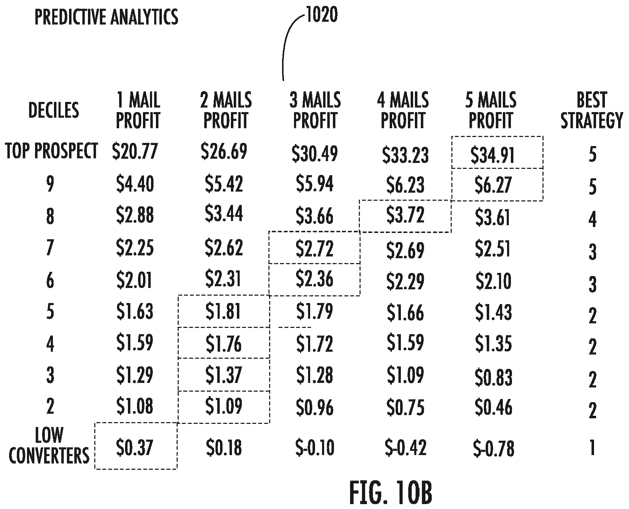

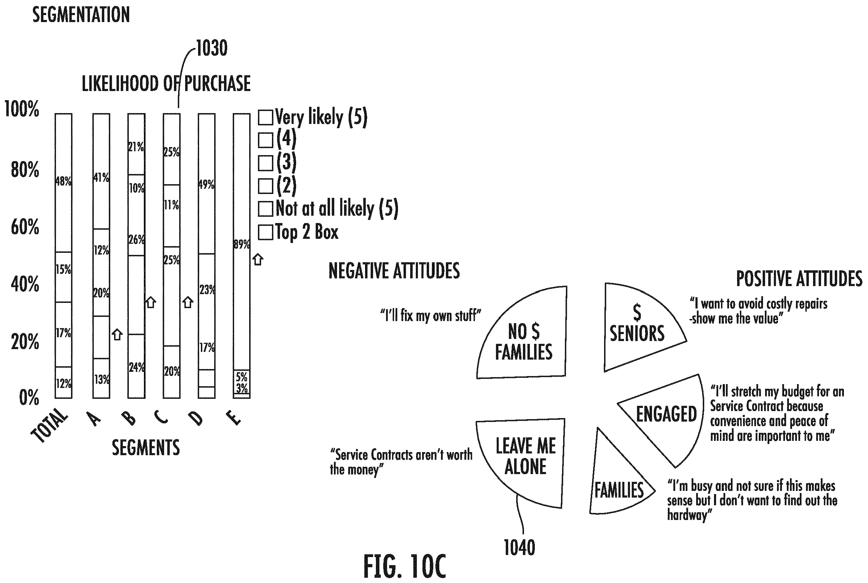

In one embodiment of system for registration of products and dynamically rendering of content 10, two models are used to make a decision about which offer to make. In this scenario, a classification model such as logistic regression is used to rank order customers likelihood-to-respond and a generalized linear model such as multiple linear regression is used to classify customers into value segments. An example classification model is shown as 1020 in Fig. 10B and generalized linear models are shown as 1030 and 1040 in Fig. 10C. The outputs of these two models, along with other data available to system for registration of products and dynamically rendering of content 10, are then used to formulate a decision about what offer to make and which communication channel is best suited for delivering the offer. If new input data are received, the decision process can invoke these models or other models to arrive at a new decision.

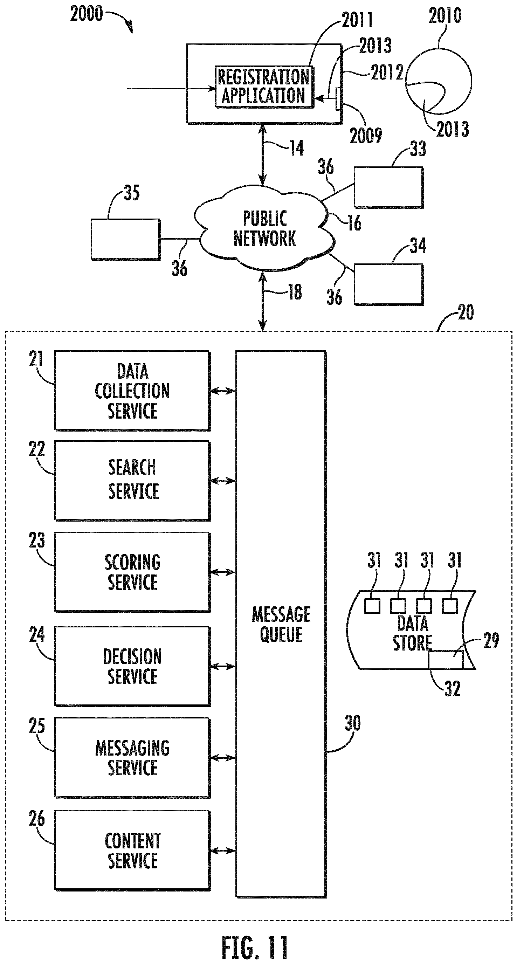

Fig. 11 is a schematic diagram of a system for registration of products and dynamically rendering of content 2000 in accordance with the teachings of the present invention. Registration application 2011 is executed on input device 2012. Input label 2010 can have embedded input 2013. Input label 2010 can be read by reader 2009 of input device 2012.

In one embodiment, reader 2009 can include at least one of an NFC reader and an RFID reader. In one embodiment, reader 2009 can include at least one identification image including a bar code reader and a QR code reader. Input label 2010 can include at least one of NFC tag and an RFID tag. Input label 2010 can include at least one identification image including a bar code and a QR code. NFC (near field communication) is a type of short distance one or two way communication for transmitting data within a short distance of 10 cm by using non-contact-type short distance wireless communication modules at the 13.56 MHz frequency band. RFID (radio frequency identification), is a one way radio communication for transmitting data at the 13.56 MHz frequency band. In one embodiment input device 2012 is a mobile device such as an iPhone or Android with built-in capabilities or an app for a NFC reader and/or RFID reader. Input label 2010 can include a particular identification image and reader 2009 can be a device capable of recognizing the identification image. For example, the particular identification image can be a bar code or a QR code. The bar code is a code provided by encoding characters or numbers into a combination of black and white bars having different thicknesses so that computers may easily read the information. The QR code (quick response code) is a two-dimensional code which can contain information in both the horizontal and vertical directions. It will be appreciated that other types of readers, tags and codes can be used in accordance with the teachings of the present invention. Input label 2010 can also include indicia to text a model number to a short code, such as text "1234567" to "QUIK" to register a product using registration application 2011.

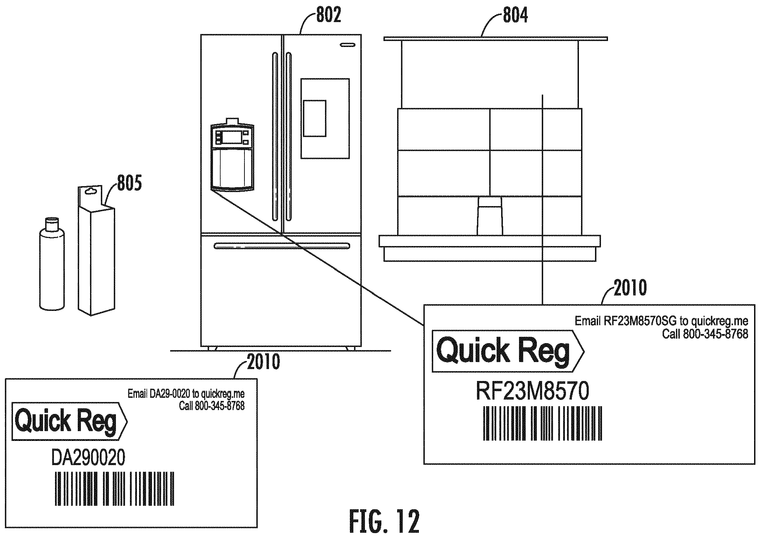

Fig. 12 is a schematic diagram of input label 2010 which can be attached for example directly to product 802, product accessory 804 and product packaging 805. For example, input label 2010 can be a static cling or sticker.

Registration application 2011 can receive input 2013 from reader 2009. For example, input 2013 can be a product model number the user would like to have registered. Input device 2012 can be a device for generating and receiving electronic data such as a cellular phone, tablet or laptop. For example, input device 2012 can be an iPhone 7, iPhone 8 or iPhone X using a mobile operating system that runs on the mobile Apple devices such as ioS 11 or iOS 13 and supports NFC. Input device 2012 can also generate input 2013 which can be an electronic message of various message types/formats including, but not limited to, SMS, MMS, RCS and/or e-mail messages. Electronic messages can include text and/or image data. Registration application 2011 can also receive input 2013 of personal information directed to the user.

In one embodiment, input 2013 is an identifier such as for example a model number of a user product. Referring to Fig. 11, input device 2012 connects over connection 14 to public network 16. Public network 16 connects over connection 18 to data collection content rendering unit 20. In one embodiment, public network 16 is the Internet and connections 14 and 18 are wifi connections. Input device 2012 can receive content from data collection and content rendering unit 20 over connections 14 and 18 using public network 16.

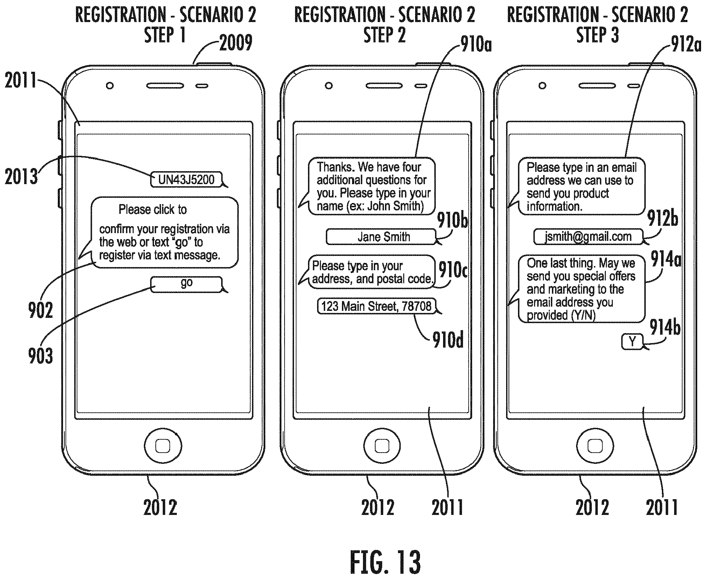

Fig. 13 is a schematic diagram of a registration scenario for use in the registration process in the present invention. Input device 2012 taps input label 2013 to navigate to registration application 2011. Registration application 2011 receives information from reader 2009 such as an identifier of a product. Text 902 is sent to input device 2012. Text 902 can include a link or an indication to confirm registration by texting a message for example "go". If the link is accessed at input device 2012, mobile enabled registration page 904 can be displayed at input device 2012. Confirmation text message 903 is sent to a short code or telephone number as described above. Registration information texts 910a-910n can be sent and received at input device 2012. Registration information texts 910a-910n can include for example a name, address and phone number. Email registration information texts 912a-912b can be sent and received at input device 2012 to enter email registration information. Privacy information texts 914a-914b can be sent and received at input device 2012 to enter privacy registration information in order to opt into future communication. Registration information texts 910a-910n, email registration information texts 912a-912b and privacy information texts 914a-914b can be used to enter registration information into registration application 2011 as shown in Fig. 11.

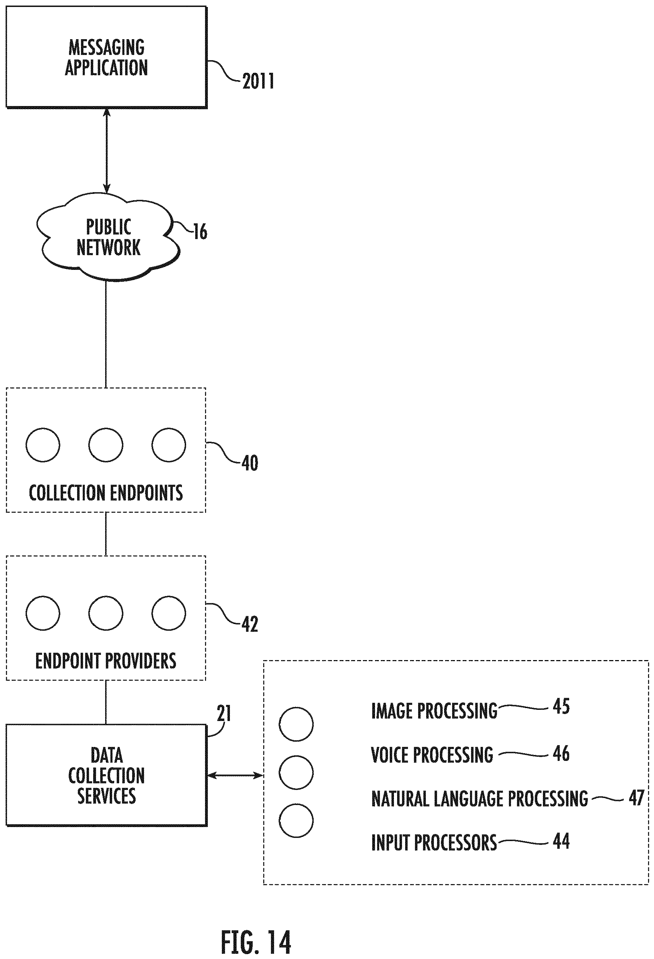

Fig. 14 is a schematic diagram of an implementation of an enhancement to data collection service module 21. Collection endpoints module 40 receives data from registration application 2011 through public network 16. For example, collection endpoints module 40 can receive a text message or data from a hyperlink accessed by registration application 2011. Endpoint providers 42 receive data from endpoints module 40 and forwards the data to data collection service module 21 to generate a registration request. In an alternative embodiment, input processors 44 can forward information to data collection service module 21. Input processors 44 can include image processing 45, voice processing 46 and natural language processing 47. Image processing 45 can receive an uploaded image such as a serial number of a product. Image processing 45 can run Al image recognition to extract data of a serial number from the uploaded image. The extracted serial number can be forwarded to data collection service module 21. Voice processing 46 can receive spoken information directed to a product such as a serial number of a product to determine data of the serial number. The serial number can be forwarded to data collection service module 21. Natural language processing 47 can receive spoken information directed to a product such as a serial number of a product to determine data of the serial number. The serial number can be forwarded to data collection service module 21. In one embodiment, voice processing 46 and natural language processing 47 can be performed with integrated voice enabled systems. Example voice enabled systems include Alexa, Google Assistant and Siri.

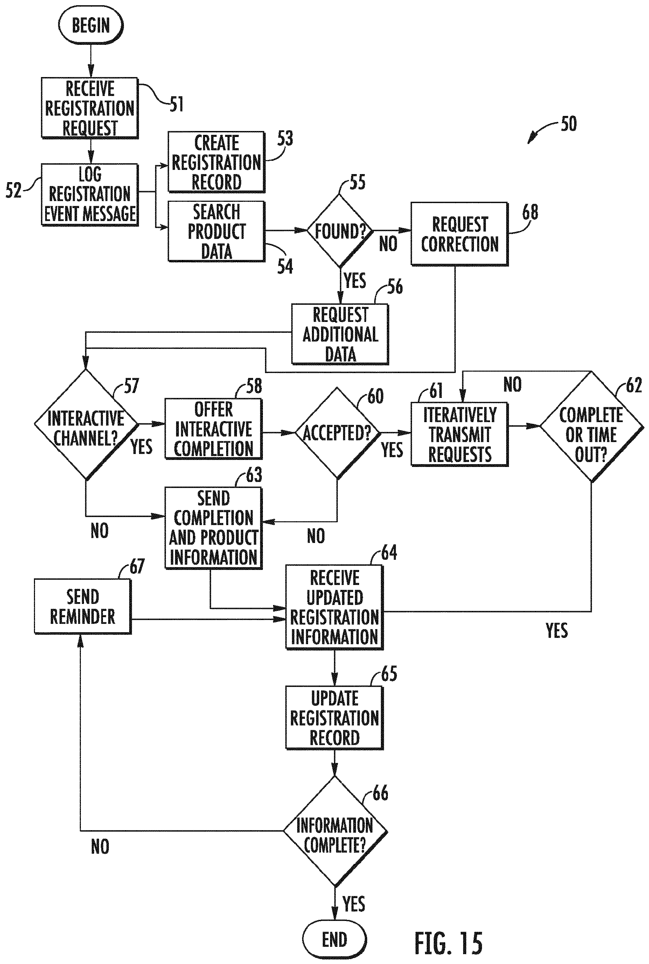

Fig. 15 is a flow diagram of a method for registration of a product 50 for implementation of search service module 22. In block 51, a registration request is received. The registration request is generated by input 13 being received at registration application 2011 as shown in Fig. 11 or using collection endpoints module 40 and endpoint providers as shown in Fig. 14 and described above. In block 52, the received registration request is logged as a registration event message. In block 53, a registration record is created. Product data from the registration event message is searched in data storage unit in block 54 and the results are determined using data decision block 55. If the product is determined to be registered in decision block 55, a request for additional data is performed in block 56. The additional data can include for example a name of a purchaser of the product to be registered, street address of the purchaser, email address of the purchaser and date the product was purchased. Interactive channel decision block 57 determines if the additional data is directed to an interactive channel. If the additional data is determined to be directed to an interactive channel, offer interactive completion block 58 is activated to send an offer to a user based on the additional data. In acceptance decision block 60, if it is determined that the interactive offer was accepted, block 61 is performed to interactively transmit requests to the user for completion of the requested additional data. Review of the requested data is performed at completion decision block 62. If completion decision block 62 determines the registration is complete, updated registration information is received at block 64. If it is determined in completion decision block 62, that the offer is not completed or if there is a time out, block 61 is performed to interactively submit the request to completion decision block 62.

If interactive channel decision block 57 determines the additional data is not directed to an interactive channel, send completion and product information block 63 sends completion and product information to block 64. In block 65, the registration record is updated with the updated registration information. Information complete decision block 66 determines if the registration information is complete. If the registration information is complete, an updated registration record is stored in data storage unit 32 and a registration event is sent to message queue 30, shown in Fig. 11. Referring to Fig. 15, if information complete decision block 66 determines the registration record is incomplete, a reminder is sent in block 67 for updated registration information which is forwarded to block 64.

If the product is determined not to be registered in decision block 55, block 68 is performed to request a correction which is forwarded to interactive channel decision module 57 and proceeds thereafter as described above.

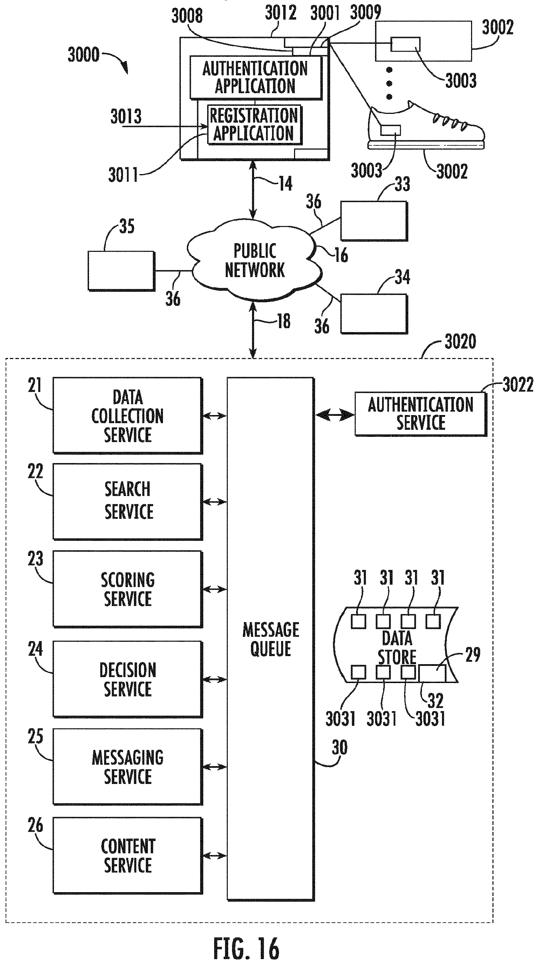

Fig. 16 is a schematic diagram of a system for authentication and registration of products and dynamically rendering of content 3000 in accordance with the teachings of the present invention. Authentication application 3001 is executed on input device 3012. Product 3002 can have embedded identification tag 3003. For example, product 3002 can be a user product. In one embodiment, product 3002 is a shoe. For example, product 3002 can be an athletic shoe or a sneaker.

Identification tag 3003 can be read by reader 3009 of input device 3012 to generate identification input 3008. In one embodiment, reader 3009 can include at least one of an NFC reader and an RFID reader. Product identification tag 3003 can include at least one of a NFC tag and an RFID tag. NFC (near field communication) is a type of short distance one or two way communication for transmitting data within a short distance of 10 cm by using non-contact-type short distance wireless communication modules at the 13.56 MHz frequency band. RFID (radio frequency identification), is a one way radio communication for transmitting data at the 13.56 MHz frequency band. In one embodiment input device 3012 is a mobile device such as an iPhone or Android with built-in capabilities or an app for a NFC reader and/or RFID reader. It will be appreciated that other types of readers, tags and codes can be used in accordance with the teachings of the present invention.

Authentication application 3001 can receive identification input 3008 from reader 3009. Input device 3012 can forward identification input 3008 over connection 14 to public network 16. Public network 16 connects over connection 18 to authentication and data collection content rendering unit 3020. In one embodiment, public network 16 is the Internet. Connection 14 can be a wifi connection. Input device 3012 can receive content from authentication and data collection content rendering unit 3020 over connections 14 and 18 using public network 16.

Authentication data collection content rendering system 3020 includes authentication service module 3022, data collection service module 21, search service module 22, scoring service module 23, decision service module 24, message service module 25 and content service module 26. Content service module 26 can dynamically render content for both users and manufacturers, retailers or third party providers based on the registration of a product as described below. Authentication service module 3022, data collection service module 21, search service module 22, scoring service module 23, decision service module 24, message service module 25 and content service module 26 can be embodied on non-transitory computer memory of a data collection content rendering system 3020 system operating on a processing system including one or more processors. Authentication service module 3022, data collection service module 21, search service module 22, scoring service module 23, decision service module 24, message service module 25 and content service module 26 send and receive data using message queue 30.

Data is stored in data storage unit 32. Data can include authentication records 3031. Authentication records 3031 can be directed to an authenticated product which has been registered in authentication data collection content rendering system 3020. Data can include registration records 31 and data 29 directed to a product or service which can be provided or associated with the product. For example, data storage unit 32 can be a database. Manufacturers 33, retailers 34 and third party service providers 35 can receive dynamically rendered content over connection 36 from data collection content rendering unit 20 over public network 16.

Authentication service module 3022 received identification input 3008. Authentication service module 3022 can search authentication records 3031 for a match of identification input 3008. Registration application 3011 can be executed on input device 3012 if identification input 3008 is determined to match an authentication record 3031.

Registration application 3011 can receive registration information to register a product which was authenticated by authentication application 3001. For example, identification input 3008 can be a product model number of an authenticated product that the user can have registered. Input device 3012 can also generate input 3013 which can be an electronic message of various message types/formats including, but not limited to, SMS, MMS, RCS and/or e-mail messages. Electronic messages can include text and/or image data. Registration application 3011 can receive input 3013 of personal information directed to the user.

Input device 3012 can be a device for generating and receiving electronic data such as a cellular phone, tablet or laptop. For example, input device 3012 can be an iPhone 7, iPhone 8 or iPhone X using a mobile operating system that runs on the mobile Apple devices such as ioS 11 or iOS 13 and supports NFC.

In one embodiment, input identification 3008 includes an identifier such as for example of a user product. Input device 3012 connects over connection 14 to public network 16. Public network 16 connects over connection 18 to data collection content rendering unit 20.

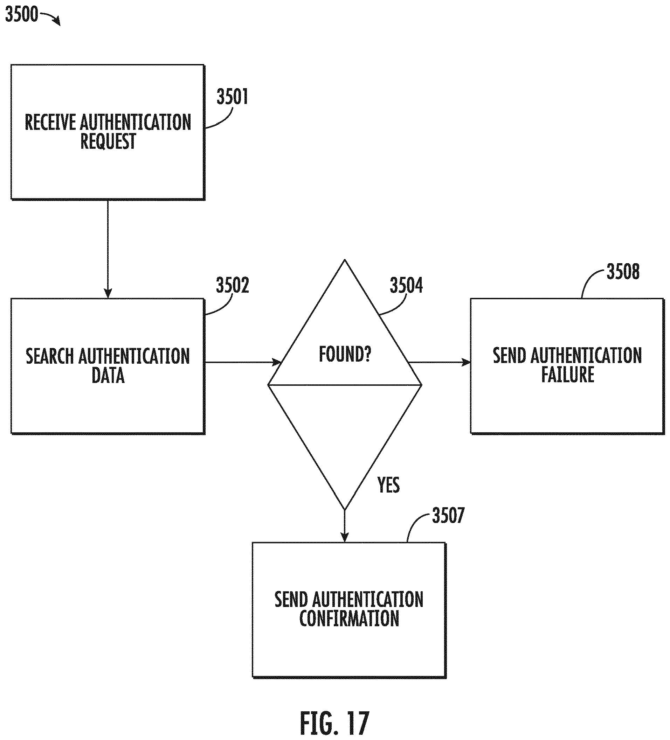

Fig. 17 is of a method for authentication of a product 3500 for implementation of authentication service module 3022. In block, 3501, an authentication request is received. The authentication request is generated by identification input 3008 being received at authentication application 3001 as shown in Fig. 16. The authentication request can include identification input 3008. Referring to Fig. 17, in block 3504 the authentication identification input is searched in the data storage and the results are determined using data decision block 3504. Referring to Fig. 16, authentication input 3008 is searched against authentication records 3031 for a match.

Referring to Fig. 17, if the product is determined to be authenticated in decision block 3504, an authentication confirmation is sent in block 3507. If the product is determined not be authenticated in decision block 3504, an authentication failure is sent in block 3508.

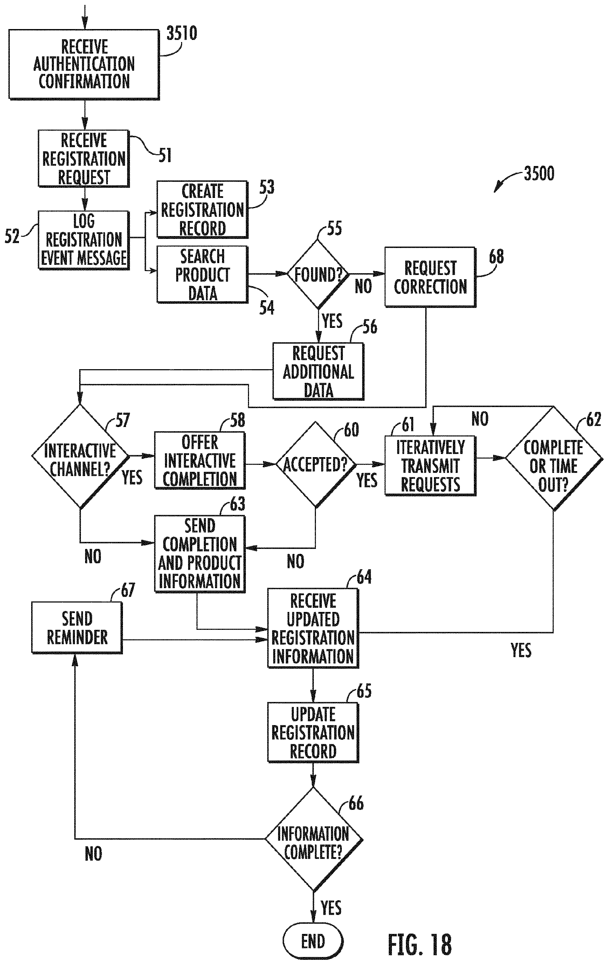

Fig. 18 is a flow diagram of a method for registration of an authenticated product 3550 for implementation of authentication service module 3022 and search service module 22. An authentication confirmation is received 3510. In block 51, a registration request is received. The registration request is generated by identification input 3008 being received at registration application 3011 as shown in Fig. 16. Referring to Fig. 18, in block 52, the received registration request is logged as a registration event message. In block 53, a registration record is created. Product data from the registration event message is searched in data storage unit in block 54 and the results are determined using data decision block 55. If the product is determined to be registered in decision block 55, a request for additional data is performed request for additional data is performed in block 56. If the product is determined to be registered in decision block 55, a request for additional data is performed in block 56. The additional data can include for example a name of a purchaser of the product to be registered, street address of the purchaser, email address of the purchaser and date the product was purchased. Interactive channel decision block 57 determines if the additional data is directed to an interactive channel. If the additional data is determined to be directed to an interactive channel, offer interactive completion block 58 is activated to send an offer to a user based on the additional data. In acceptance decision block 60, if it is determined that the interactive offer was accepted, block 61 is performed to interactively transmit requests to the user for completion of the requested additional data. Review of the requested data is performed at completion decision block 62. If completion decision block 62 determines the registration is complete, updated registration information is received at block 64. If it is determined in completion decision block 62, that the offer is not completed or if there is a time out, block 61 is performed to interactively submit the request to completion decision block 62.

If interactive channel decision block 57 determines the additional data is not directed to an interactive channel, send completion and product information block 63 sends completion and product information to block 64. In block 65, the registration record is updated with the updated registration information. Information complete decision block 66 determines if the registration information is complete. If the registration information is complete, an updated registration record is stored in data storage 32 and a registration event is sent to message queue 30, shown in Fig. 16. Referring to Fig. 18, if information complete decision block 66 determines the registration record is incomplete, a reminder is sent in block 67 for updated registration information which is forwarded to block 64.

If the product is determined not to be registered in decision block 55, block 68 is performed to request a correction which is forwarded to interactive channel decision module 57 and proceeds thereafter as described above.

Embodiments discussed herein can be implemented in a computer communicatively coupled to a network (for example, the Internet), another computer, or in a standalone computer. As is known to those skilled in the art, a suitable computer can include a central processing unit ("CPU"), at least one read-only memory ("ROM"), at least one random access memory ("RAM"), at least one hard drive ("HD"), and one or more input/output ("I/O") device(s). The I/O devices can include a keyboard, monitor, printer, electronic pointing device (for example, mouse, trackball, stylus, touch pad, etc.), or the like. ROM, RAM, and HD are computer memories for storing computer-executable instructions executable by the CPU or capable of being compiled or interpreted to be executable by the CPU. The processes described herein may be implemented in suitable computer-executable instructions that may reside on a non-transitory computer readable medium (for example, ROM, RAM, and HD, etc.), hardware circuitry or the like, or any combination thereof. Within this disclosure, the term "computer readable medium" is not limited to ROM, RAM, and HD and can include any type of data storage medium that can be read by a processor. Examples of computer-readable storage media can include, but are not limited to, volatile and non-volatile computer memories and storage devices such as random access memories, read-only memories, hard drives, data cartridges, direct access storage device arrays, magnetic tapes, floppy diskettes, flash memory drives, optical data storage devices, compact-disc read-only memories, and other appropriate computer memories and data storage devices. Thus, a computer-readable medium may refer to a memory, a disk, a data cartridge, a data backup magnetic tape, a floppy diskette, a flash memory drive, an optical data storage drive, a CD-ROM, ROM, RAM, HD, or the like.

Any suitable programming language can be used to implement the routines, methods or programs of embodiments of the invention described herein, including C, C++, Java, JavaScript, HTML, or any other programming or scripting code, etc. Other software/hardware/network architectures may be used. For example, the functions of the disclosed embodiments may be implemented on one computer or shared/distributed among two or more computers in or across a network. Communications between computers implementing embodiments can be accomplished using any electronic, optical, radio frequency signals, or other suitable methods and tools of communication in compliance with known network protocols.

Different programming techniques can be employed such as procedural or object oriented. Any particular routine can execute on a single computer processing device or multiple computer processing devices, a single computer processor or multiple computer processors. Data may be stored in a single storage medium or distributed through multiple storage mediums, and may reside in a single database or multiple databases (or other data storage techniques). Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps and operations described herein can be performed in hardware, software embodied on hardware, firmware or any combination thereof.

Embodiments described herein can be implemented in the form of control logic in hardware or a combination of software and hardware. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

It is also within the spirit and scope of the invention to implement in software programming or code an of the steps, operations, methods, routines or portions thereof described herein, where such software programming or code can be stored in a computer-readable medium and can be operated on by a processor to permit a computer to perform any of the steps, operations, methods, routines or portions thereof described herein. The invention may be implemented by using software programming or code in one or more general purpose digital computers, by using application specific integrated circuits, programmable logic devices, field programmable gate arrays, optical, chemical, biological, quantum or nanoengineered systems, components and mechanisms may be used. In general, the functions of the invention can be achieved by any means as is known in the art. For example, distributed, or networked systems, components and circuits can be used. In another example, communication or transfer (or otherwise moving from one place to another) of data may be wired, wireless, or by any other means.

A "computer-readable medium" may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory. Such computer-readable medium shall generally be machine readable and include software programming or code that can be human readable (e.g., source code) or machine readable (e.g., object code). Examples of non-transitory computer-readable media can include random access memories, read-only memories, hard drives, data cartridges, magnetic tapes, floppy diskettes, flash memory drives, optical data storage devices, compact-disc read-only memories, and other appropriate computer memories and data storage devices. In an illustrative embodiment, some or all of the software components may reside on a single server computer or on any combination of separate server computers. As one skilled in the art can appreciate, a computer program product implementing an embodiment disclosed herein may comprise one or more non-transitory computer readable media storing computer instructions translatable by one or more processors in a computing environment.

A "computer" or "processor" may include any hardware system, mechanism or component that processes data, signals or other information. A computer or processor can include a system with a general-purpose central processing unit, multiple processing units, dedicated circuitry for achieving functionality, or other systems. Processing need not be limited to a geographic location, or have temporal limitations. For example, a computer or processor can perform its functions in "real-time," "offline," in a "batch mode," etc. Portions of processing can be performed at different times and at different locations, by different (or the same) processing systems.

It is to be understood that the above described embodiments are illustrative of only a few of the many possible specific embodiments, which can represent applications of the principles of the invention. Numerous and varied other arrangements can be readily devised in accordance with these principles by those skilled in the art without departing from the spirit and scope of the invention.

## Claims

1. A method for authenticating a product (3002), the method comprising the steps of:
receiving, over a network (16) by an authentication module embodied in a non-transitory computer memory of an authentication data collection content rendering system (20, 3020) operating on one or more processors, an electronic authentication request message from an input device (12, 2012), the authentication request message including an identification input of a user product (3002);
searching data storage unit (32) for data of a user product (3002) identified by the identification input of the user product (3002) by an authentication service module (3022) embodied in a non-transitory computer memory of an authentication data collection content rendering system (20, 3020); and
sending to the input device an authentication confirmation when the authentication service module (3022) has identified user can authentication record stored in the data storage unit (32).

2. The method of claim 1 wherein the electronic authentication request message is generated from the input device (12, 2012) communicatively connected to the authentication data collection content rendering system (20, 3020) via the network (16), the input device (12, 2012) having a reader (2009, 3009), the reader (2009, 3009) comprises at least one of a NFC reader and an RFID reader, wherein the reader (2009, 3009) inputs the identification input of a user product (3002) by reading a RFID tag or NFC tag.

3. The method of claim 1 further comprising the steps of:
receiving, over the network (16) by a data collection module embodied in a non-transitory computer memory of the authentication data collection content rendering system (20, 3020) operating on one or more processors, an electronic registration request message from the input device (12, 2012), the registration request message including an identifier of a user product (3002);
searching data storage unit (32) for data of a user product (3002) identified by the identifier of the user product (3002) by a search service module (22) embodied in a non-transitory computer memory of the authentication data collection content rendering system (20, 3020);
searching data storage unit (32) for data of a user product (3002) identified by the identifier of the user product (3002) by a search service module (22) embodied in a non-transitory computer memory of the authentication data collection content rendering system (20, 3020);
asynchronously collecting user information from the user by the data collection module when the search service module (22) has identified that the identifier of the user product (3002) has identified user product (3002) stored in the data storage unit (32), the data collection module creating a registration record with the identifier of a user product (3002) and the user information;
storing the registration record in a data storage unit (32); and
asynchronously generating one or more response events (72) by a content service module (26) embodied in the non-transitory computer memory of the authentication data collection content rendering system (20, 3020) to dynamically render content associated with the registration record.

4. The method of claim 3 wherein the electronic registration request message includes input generated from a collection endpoints module (40) embodied in a non-transitory computer memory of a collection endpoints system operating on one or more processors, the collection endpoints module (40) using data received from the input device (12, 2012) communicatively connected to the collection endpoints system via the network (16), the data being generated from one or more of an electronic text code, a hyperlink accessed by a messaging application (11) running on the input device (12, 2012), image processing, voice processing and natural language processing.

5. The method of claim 3 further comprising the steps of:
the data collection module generating a registration event (70) when the registration record is created and posting the registration event (70) in a queue;
asynchronously receiving from the queue the registration event (70) at a scoring service module (23) embodied in the non-transitory computer memory of the data collection content rendering system (20, 3020), the scoring service module (23) obtaining the stored registration record and determining a score for attributes from the registration record; and
posting the score as the response event (72) into the queue.

6. The method of claim 5 wherein the attributes from the registration record include a probability of the user to respond and a monetary value of a specific accessory or service for purchase.

7. The method of claim 6 further comprising the steps of:
asynchronously receiving the score as the response event (72) from the queue;
activating a decision service module (24) to determine a decision from the score and the data from the registration record; and
posting the decision as the response event (72) in the queue.

8. The method of claim 7 wherein the decision is based on if the score is above a predetermined threshold generating an offer and further comprising the step of:
posting the offer on one or more of a social media platform, platform of a user, platform of a manufacturer of a user product (3002) and a third-party E-commerce platform.

9. The method of claim 7 further comprising the steps of:
asynchronously receiving the decision as the response event (72) from the queue;
activating a message service module (25) embodied in the non-transitory computer memory of the authentication data collection content rendering system (20, 3020), the message service module (25) obtaining content from the data storage unit (32)based on the decision; and
the message service module (25) posting the obtained content on the queue to render the content associated with the registration record.

10. The method of claim 7 further comprising the steps of:
asynchronously receiving the decision as the response event (72); the decision service module (24) delegating the response event (72) to a privacy service to get customer data, get regulatory policies and/or local policies to set a privacy action based on the customer data and the regulatory and/or local policies;
generating a decision including the privacy action as a response event (72); and
posting the decision including the privacy action as a response event (72) in the queue.

11. The method of claim 3 wherein the input includes a data message from a social media platform and the collected user information includes one or more of data demographic and propensity data from the social media platform.

12. A method for registering a product (3002), the method comprising the steps of:
receiving, over a network (16) by a data collection module embodied in a non-transitory computer memory of a data collection content rendering system (20, 3020) operating on one or more processors, an electronic registration request message from an input device (12, 2012), the registration request message including an identifier of a user product (3002);
searching data storage unit (32) for data of a user product (3002) identified by the identifier of the user product (3002) by a search service module (22) embodied in a non-transitory computer memory of a data collection content rendering system (20, 3020);
asynchronously collecting user information from the user by the data collection module when the search service module (22) has identified that the identifier of the user product (3002) has identified user product (3002) stored in the data storage unit (32), the data collection module creating a registration record with the identifier of a user product (3002) and the user information;
storing the registration record in a data storage unit (32); and
asynchronously generating one or more response events (72) by a content service module (26) embodied in the non-transitory computer memory of the data collection content rendering system (20, 3020) to dynamically render content associated with the registration record wherein the electronic registration request message is generated from an input device (12, 2012) communicatively connected to the data collection content rendering system (20, 3020) via the network (16), the input device (12, 2012) having a reader (2009, 3009), wherein the reader (2009, 3009) inputs the identifier of a user product (3002) by reading an input label and wherein the reader (2009, 3009) comprises at least one of a NFC reader, an RFID reader, and an identification image reader (2009, 3009) and the tag comprises at least one of an NFC tag, RFID tag and an identification image.

13. The method of claim 12 further comprising the steps of:
the data collection module generating a registration event (70) when the registration record is created and posting the registration event (70) in a queue;
asynchronously receiving from the queue the registration event (70) at a scoring service module (23) embodied in the non-transitory computer memory of the data collection content rendering system (20, 3020), the scoring service module (23) obtaining the stored registration record and determining a score for attributes from the registration record; and
posting the score as the response event (72) into the queue, wherein the attributes from the registration record include a probability of the user to respond and a monetary value of a specific accessory or service for purchase and/or if the score is above a predetermined threshold the user is entered into a marketing campaign.

14. The method of claim 13 wherein the decision is based on if the score is above a predetermined threshold generating an offer and further comprising the step of:
posting the offer on one or more of a social media platform, platform of a user, platform of a manufacturer of a user product (3002) and a third-party E-commerce platform.

15. The method of claim 14 wherein the input includes a data message from a social media platform and the collected user information includes one or more of data demographic and propensity data from the social media platform.
